# DEMANDE DE BREVET EUROPEEN

(11) **EP 0 870 527 A1**
(43) Date de publication de la demande: **14.10.1998**
(21) Numéro de dépôt: 98430006.1
(22) Date de dépôt: 20.03.1998
(51) Int. Cl.: B01D 39/06, B01D 24/04, B01D 24/28

(54) **Système et cartouche de filtration contenant un matériau granuleux alvéolaire**

(30) Priorité: 11.04.1997 FR 9704725
(71) Demandeur: Boissie, Chantal, 13380 Plan de Cuques (FR); Lucenet, Deborah, 13170 Fuveau (FR); Lucenet, David, 13170 Fuveau (FR); Satz, Nicolas, 84300 Draguignan (FR)
(72) Inventeur: Boissie, Chantal, 13380 Plan de Cuques (FR); Lucenet, Deborah, 13170 Fuveau (FR); Lucenet, David, 13170 Fuveau (FR); Satz, Nicolas, 84300 Draguignan (FR)
(74) Mandataire: Somnier, Jean-Louis

(57) **Abrégé**

L'application principale de l'invention est la réalisation de cartouches, de filtres et de systèmes complets de filtration pour régénérer en particulier les eaux de piscine (1) et comportant pour cela au moins un système de traitement physique de l'eau par un matériau granulaire inerte enfermé dans au moins une enveloppe (4, 10, 15) dans laquelle ladite eau peut circuler en traversant ledit matériau ; suivant l'invention celui-ci à structure alvéolaire de densité inférieure à 1 est de la pouzzolane de granulométrie inférieure ou égale à 25 mm.

## Description

La présente invention a pour objet des systèmes et des cartouches de filtration contenant un matériau granuleux alvéolaire.

Le secteur technique de l'invention est le domaine des procédés de séparation entre fluide et solide dont la filtration est assurée par une substance filtrante non agglomérée.

L'une des applications de l'invention est la réalisation de cartouches de filtre et de systèmes complets de filtration pour régénérer les eaux de piscine afin de pouvoir conserver la même eau en la maintenant dans un état de propreté satisfaisante ; d'autres applications sont également possibles tel que le traitement des eaux pluviales avant leur rejet dans le milieu naturel, la filtration des eaux usées ménagères, et chaque fois qu'un traitement physique d'effluents de toute nature est souhaité : on peut citer par exemple mais sans être limitatif, comme la présente description de l'invention en donne divers modes de réalisation ci-après, la filtration des effluents des groupes septiques autonomes, individuelles ou collectives, des effluents de stations d'épuration, des effluents de sorties de bassins d'orage, des effluents de récupération de zones de distribution de carburant ou de sorties de séparateurs d'hydrocarbure, des lixiviats avant traitement chimique, des déjections animales fluides (lisiers de porc, fientes d'élevage avicole..) avant traitement chimique également....

En effet, il existe à ce jour différents types de système de filtration, composés en général de lits successifs d'éléments filtrants, tel que décrit par exemple dans la demande de brevet FR 2502508 déposée le 30 mars 1981 sur une "structure de filtration, procédé de réalisation de telles structures et dispositif d'ultrafiltration", comportant essentiellement un support poreux en matériau fritté à grains relativement gros, portant une couche filtrante plus mince en un matériau également fritté à grains relativement fins.... On peut citer également la demande de brevet EP 634952 déposée sous priorité allemande du 6 avril 1992, intitulée "élément de filtrage avec un corps indéformable perméable et poreux en matière plastique"...

On pourrait citer bien sûr bien d'autres dispositifs de filtration tels que ceux des circuits de régénération d'eau de piscine qui utilisent essentiellement du sable : celui-ci est disposé dans des réservoirs dans lesquels on fait circuler l'eau mais avec l'inconvénient que le sable d'une part est de haute densité et d'autre part se tasse ce qui nécessite un inversement du circuit d'eau assez fréquent car sinon la porosité du sable diminue, augmentant la perte de charge dans le circuit et diminuant fortement son efficacité.

Par ailleurs, pour réaliser les cartouches de filtre telles que celles citées et décrites dans les demandes de brevet ci-dessus, on utilise des matériaux spécifiques qui sont assez onéreux de fabrication et de mise en oeuvre, sans pour cela être d'une efficacité de rétention satisfaisante quelque soit les éléments en suspension dans le fluide qui les traverse, sauf à diminuer la porosité dudit filtre ; mais cela augmente alors la perte de charge des circuits de circulation du fluide, nécessitant alors des installations importantes.

Le problème posé est donc de pouvoir réaliser des systèmes de filtration pour traitement physique de fluide utilisant un matériau qui soit très peu coûteux à mettre en oeuvre, qui soit inerte vis à vis du fluide qu'il doit filtrer, et qui soit capable de retenir un maximum d'éléments en suspension dans celui-ci, tout en ayant une porosité pour le passage du fluide qui ne soit pas trop faible pour ne pas trop augmenter les pertes de charge, et qui soit facile de mise en oeuvre pour être par exemple soit incorporé dans tous circuits déjà existants, soit utilisé sur site où le système de filtration doit pouvoir être enterré ou disposé dans un abri fermé.

Une solution au problème posé est un système de filtration pour traitement physique de fluide et comportant un matériau granulaire inerte enfermé dans au moins une enveloppe dans laquelle ledit fluide peut circuler en traversant ledit matériau, tel que celui-ci, à structure alvéolaire de densité inférieure à 1, est de la pouzzolane de granulométrie inférieure ou égale à 25 mm et de préférence 20 mm.

Suivant la présente invention, ladite enveloppe est une cartouche filtrante ayant au moins deux faces parallèles perforées, la pouzzolane remplissant ladite cartouche étant disposée en au moins une couche parallèle à ses faces et perpendiculaire à l'axe d'arrivée du fluide ; de préférence, ledit système de filtration comporte au moins deux couches de granulométrie différentes de pouzzolane, l'une disposée avant la suivante par rapport à la direction d'arrivée du fluide étant constituée de sable dont les grains fins sont d'une granulométrie inférieure ou égale à 4 mm, et de préférence à 2 mm, et l'autre étant constituée de grains de granulométrie inférieure ou égale à 25 mm, et de préférence entre 2 et 20 mm, cette dernière au moins étant contenue dans ladite cartouche filtrante.

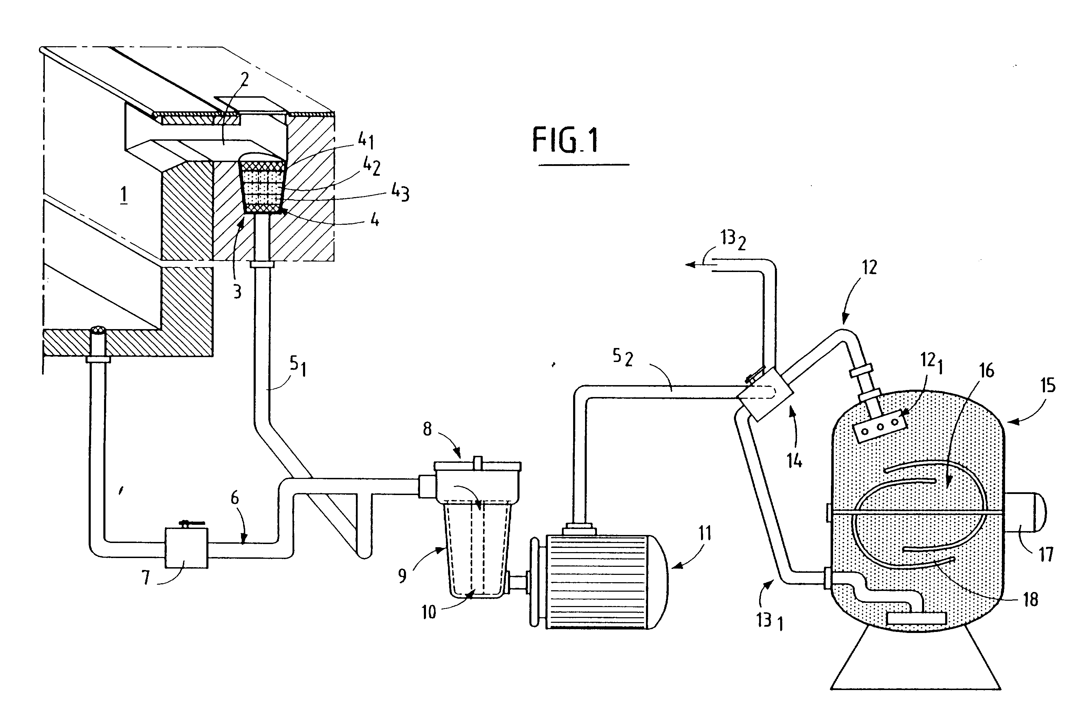

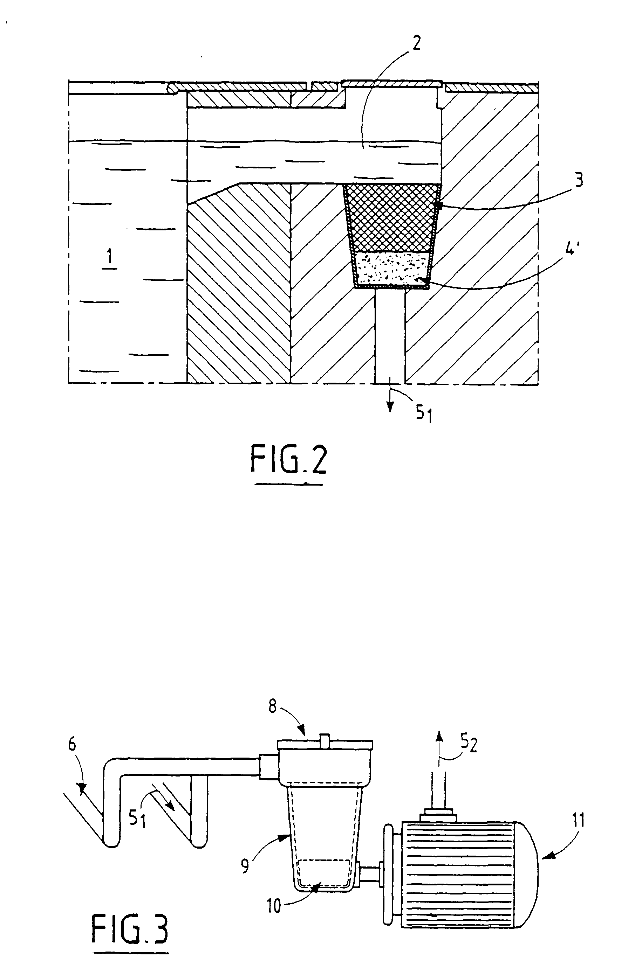

Dans un mode particulier d'utilisation un tel système de filtration suivant l'invention est inclus dans un circuit de régénération et de recyclage d'eau contenu dans un réservoir de stockage et comportant au moins une pompe de circulation ; ledit réservoir de stockage de l'eau peut être une piscine tel que décrit ci-après dans les figures 1 à 3 : l'aspiration de l'eau par ladite pompe est alors réalisée à travers un conduit dont l'orifice est disposé au niveau de la surface de l'eau de la piscine et comporte un panier faisant tamis pour la récupération des déchets ; ce panier inclut suivant l'invention une cartouche filtrante de forme extérieure symétrique par rapport à l'axe d'arrivée du fluide dans ledit panier, et la pouzzolane remplissant ladite cartouche étant disposée comme précisé ci-dessus en au moins une et de préférence deux couches perpendiculaires à cet axe, l'une pour arrêter les très fines particules étant constituée de grains fins de granulométrie inférieure ou égale à 4 mm et de préférence de moins de 2 mm, et l'autre de grains de granulométrie inférieurs à 25 mm et de préférence compris entre 2 et 20 mm, et même 2 à 15 ou 2 à 6 mm : cette granulométrie est définie par l'équilibre à trouver entre l'efficacité de filtration, qui augmente bien entendu en diminuant la granulométrie car on augmente alors pour un volume de matériau donné la surface totale de celui-ci en contact avec le fluide passant entre les grains (par exemple une granulométrie de 20 à 50 mm donne une surface spécifique de contact de l'ordre de 200 m² par m³ de pouzzolane, tandis qu'une granulométrie de 50/100 mm donne une surface spécifique de 100 m² par m³), et les pertes de charge créées dans le circuit qui augmentent alors en même temps et dont il faut limiter la valeur sous peine de diminuer le débit et donc le taux de recirculation du fluide, à moins d'augmenter la puissance des équipements : dans la présente invention on utilise ainsi préférentiellement deux types de granulométrie disposés en série pour combiner et obtenir en particulier le meilleur compromis entre une grande surface d'échange et la réduction de la perte de charge : l'homme du métier est à même de trouveralors en prenant connaissance de la présente description le meilleur compromis suivant l'installation considérée.

Dans d'autres modes de réalisation, tels que ceux décrits ci-après dans les figures 7 à 12 et correspondant à d'autres applications, avec cependant une définition des cartouches et du choix de la granulométrie de la pouzzolane conforme aux indications ci-dessus, les cartouches filtrantes peuvent être des caissons du type de ceux décrits dans la demande de brevet FR 274 4154 publiée le 1er Août 1997, intitulée "Caisson et système isolant et de drainage de sol" et déposée par Mesdames Chantal BOISSIE et Déborah LUCENET et Monsieur David LUCENET.

En ce cas, le système de filtration suivant l'invention comporte au moins un bac étanche contenant plusieurs couches superposées, soit de l'ordre d'une dizaine, de cartouches filtrantes correspondant ainsi à une hauteur de l'ordre de 1,20 m à 1,50 m ; dans un mode préférentiel de réalisation, le système de filtration suivant l'invention comprend ainsi au moins deux tels bacs disposés en série et est inclus dans un circuit de filtration d'effluents : cette filtration est alors essentiellement assurée par la percolation de ceux-ci au travers de la pouzzolane ; leur écoulement s'effectue par gravité au moins dans un desdits bacs.

Le résultat est d'une part de nouveaux systèmes de filtration et de cartouches répondant au problème posé sans avoir les inconvénients des filtres actuels et d'autre part une nouvelle application de la pouzzolane qui est certes un matériau connu mais utilisé ici comme seul matériau de filtration d'un fluide, disposé dans au moins une enveloppe fermée parcourue par ledit fluide qui traverse la pouzzolane dont la granulométrie moyenne utilisée est inférieure ou égale à 25 mm et même à 20 mm et dont la taille des grains est calibrée suivant l'objectif d'efficacité de filtration souhaitée.

La pouzzolane est une variété de roche d'origine volcanique à structure alvéolaire, formée de scories restés à l'état meuble, que l'on trouve en très grande quantité dans les massifs volcaniques et donc d'un prix de revient très peu élevé ; ses caractéristiques mécaniques sont également très favorables pour réaliser des filtres suivant l'invention : en effet sa densité est assez faible, en moyenne de l'ordre de 0,980, du fait entre autres de sa porosité particulière grâce à des vacuoles dont certaines ne débouchent pas ; de plus ces vacuoles sont d'une dimension supérieure à 100 microns, ce qui donne à la pouzzolane grâce aux vacuoles débouchantes, d'une part une grande perméabilité et une faible capacité de rétention d'eau, et d'autre part une porosité totale interne (prenant en compte la porosité à l'air et à l'eau) de l'ordre de 12 à 16 % par rapport au volume externe encombré du matériau pour des granulométries variant respectivement de 2/5 à 10/15; comme la porosité totale externe qui tient compte des espaces entre grains est de l'ordre de 52 à 62 % pour les mêmes plages de granulométrie, on obtient une porosité totale de l'ordre de 68 à 74 % soit pratiquement constante dans la plage des granulométries considérées et même au delà.

Ainsi cette porosité très élevée associée à la rugosité également très importante et à la grande surface spécifique de la pouzzolane, en fait, d'une manière nouvelle et inattendue grâce en particulier à sa mise en oeuvre particulière suivant l'invention, un excellent matériau de filtration permettant aux divers éléments en suspension dans le fluide, qui la traverse donc assez facilement et que l'on veut ainsi filtrer, de s'accrocher et d'y être retenus, en choisissant une granulométrie strictement contrôlée appropriée à la nature des effluents à filtrer, et en la disposant suivant la mise en oeuvre de la présente invention, que ce soit en circuit fermé ou ouvert.

De plus, la pouzzolane est une roche siliceuse éruptive, donc bien inerte, dont la partie cristalline représente selon les gisements dont elles sont extraites entre 80 et 100 % du volume solide, le reste étant essentiellement vitreux et également inerte. Outre sa richesse en silice, les pouzzolanes contiennent également des oligo-éléments ce qui permet, en plus de l'efficacité du traitement physique, une meilleure qualité de l'eau ainsi filtrée ; on sait en effet que les eaux minérales naturelles qui prennent leur source dans les massifs volcaniques se chargent de tels oligo-éléments.

La pouzzolane est certes un produit connu et utilisée depuis l'époque romaine mais essentiellement comme agrégat ou liant et pour lesquels de nombreuses de demandes de brevet ont pu être déposées dont une des plus récentes FR 2730485 déposée 10 février 1995 en donne un exemple.

La pouzzolane est citée également pour des utilisations dans des lits de filtration à cheminement lent mais avec d'autres matériaux en combinaison tel que par exemple décrit dans la demande de brevet EP 517236 déposée le 5 juin 1992, mais n'a cependant jamais été utilisée d'une part seule en tant que telle comme élément de filtration dans des circuits à circulation rapide, et d'autre part dans des caissons fermés pour le traitement d'effluents et suivant le mode de réalisation et surtout dans les applications principales de l'invention que sont la régénération d'eau telle que celle des piscines, la filtration des eaux ménagères, le traitement des effluents tels que les eaux pluviales, les déjections animales fluides, les infiltrations dans les zones de distribution de carburant... comme indiqué en introduction.

On pourrait citer d'autres avantages de la présente invention, mais ceux cités ci-dessus en montrent déjà suffisamment pour en prouver la nouveauté et l'intérêt.

La description et les figures ci-après représentent des exemples de mise en oeuvre et de réalisation de l'invention mais n'ont aucun caractère limitatif : d'autres réalisations sont possibles dans le cadre de la portée et de l'étendue de cette invention en particulier en changeant la forme des enceintes et des cartouches de filtre contenant ladite pouzzolane.

La figure 1 est une vue schématique d'un circuit de régénération comprenant des éléments de filtration suivant l'invention pour l'application de traitement d'eau à partir d'un réservoir telle qu'une piscine.

La figure 2 est une vue en coupe partielle d'un conduit appelé "skimmer" d'évacuation d'eau de piscine.

La figure 3 est une vue partielle de la pompe de circulation du circuit de la figure 1 montée derrière un pré-filtre suivant l'invention.

Les figures 4 à 6 représentent des vues perspectives en semi coupe d'exemples de réalisation de cartouches de filtration suivant l'invention.

La figure 7 est une vue schématique en coupe d'une installation de filtration d'effluents comprenant un système composé d'éléments et de cartouches filtrantes suivant l'invention.

La figure 8 est une vue de dessus de l'installation de la figure 7.

La figure 9 est une vue en coupe schématique d'une installation de filtration, comme celle représentée sur la figure 7, mais simplifiée pour des utilisations de traitement d'effluents en provenance d'une fosse toutes eaux, telles que les eaux usées d'une buanderie, d'une cuisine etc...

Les figures 10 et 11 sont des vues en coupe schématique de systèmes de filtration adaptés aux effluents en provenance des eaux de pluies qui rincent les pistes des stations de distribution de carburant.

La figure 12 est une vue en coupe simplifiée d'un système de filtration suivant l'invention avec un écoulement des eaux dit siphonné.

La famille des systèmes de filtration pour traitement physique de fluide dans laquelle se situe la présente invention regroupe tous ceux comportant des matériaux granulaires inertes enfermés dans au moins une enveloppe 4, 10, 15 dans laquelle ledit fluide peut circuler en traversant ledit matériau.

Suivant la présente invention ce matériau à structure alvéolaire de densité inférieure à 1, en fait de 0,980 en moyenne, comme indiqué précédemment est de la pouzzolane 4₂, 4₃, 4₄ de granulométrie moyenne inférieure ou égale à 25 mm et de préférence 20 ou même 15 mm.

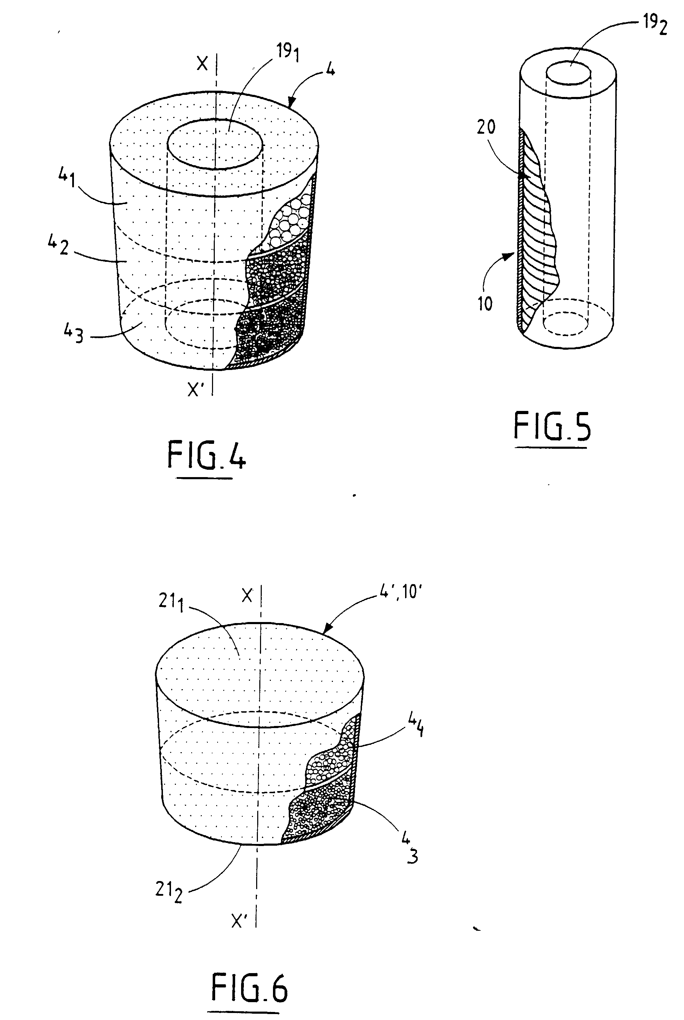

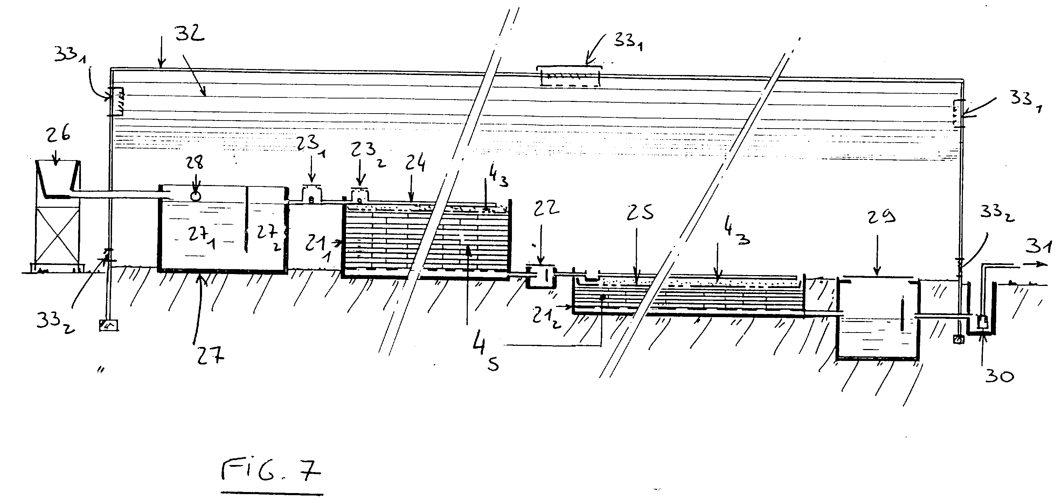

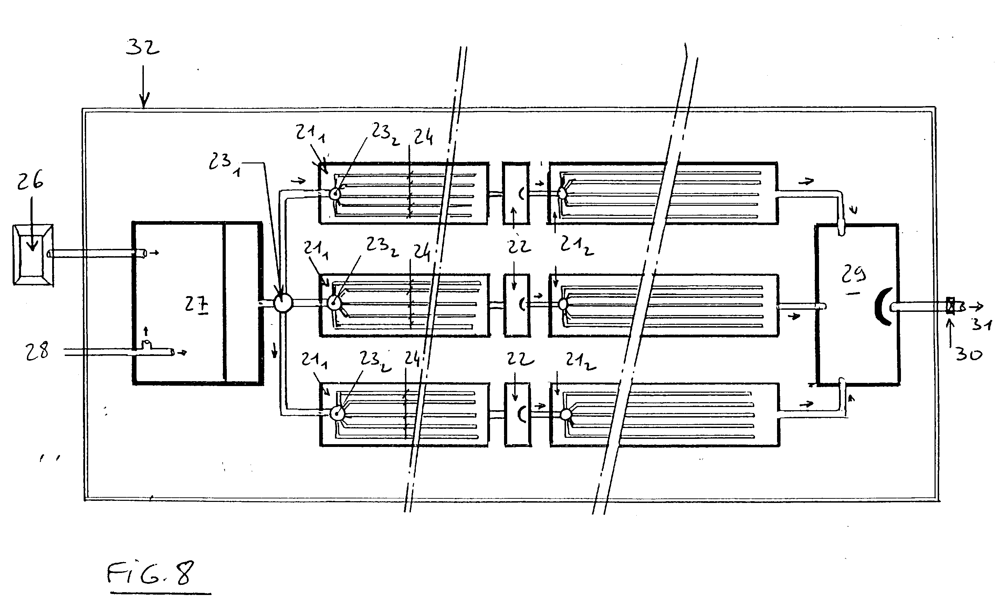

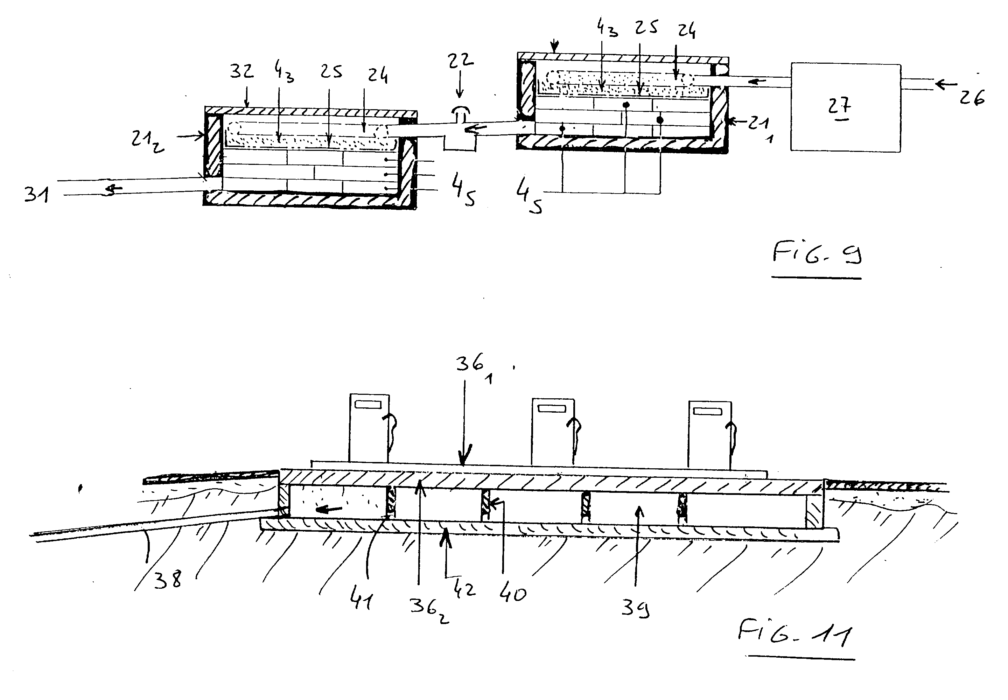

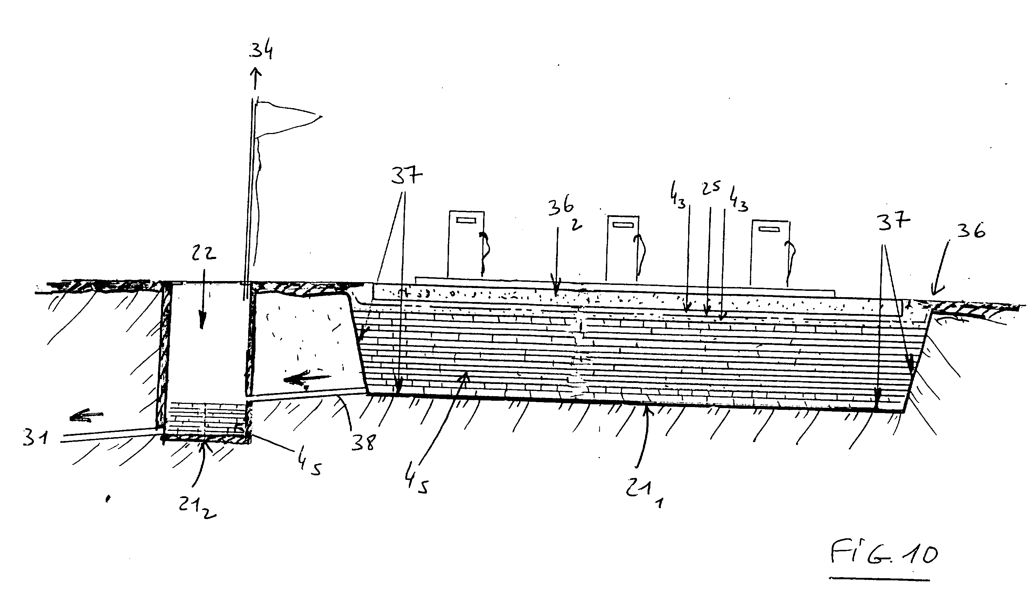

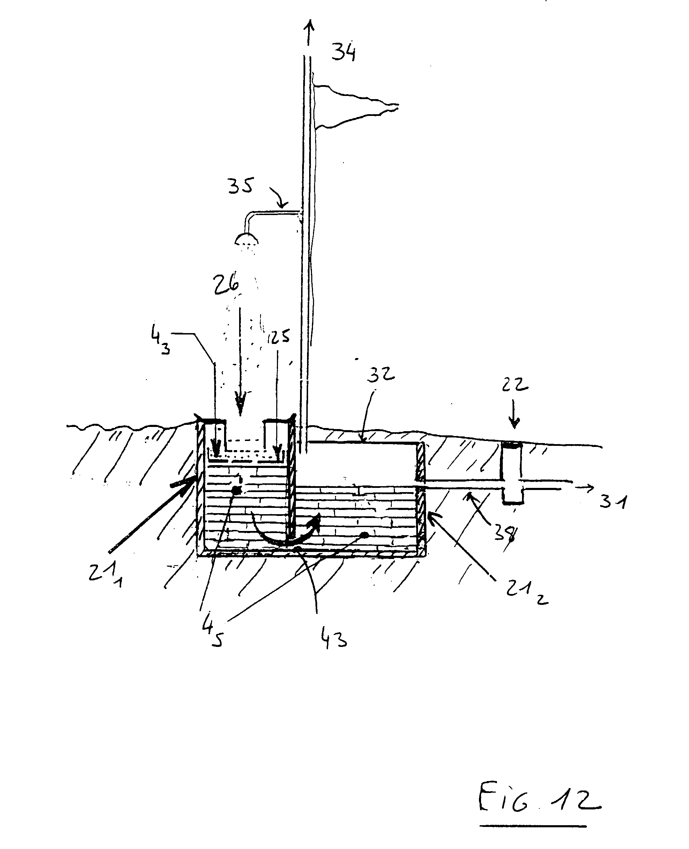

Suivant la représentation des figures 4 et 6 ladite enveloppe 4,4', 10' est une cartouche filtrante de forme extérieure symétrique par rapport à un axe XX' et de préférence cylindrique ou tronconique, la pouzzolane remplissant ladite cartouche étant disposée suivant au moins une, de préférence deux couches superposées de granulométries différentes, et perpendiculaires à l'axe XX' lequel axe XX' étant celui de l'arrivée du fluide pénétrant dans ladite cartouche, et les surfaces de l'enveloppe de celle-ci perpendiculaires auxdits axes XX' sont perforées ; s'il y a donc deux couches l'une 4₃ peut être constituée de grains fins de granulométrie inférieure ou égale à 4 mm et même 2 mm et l'autre 4_{2,} 4₄ de grains de granulométrie inférieure à 25 mm soit par exemple compris entre 2 et 20 mm et de préférence 2 à 15 et même 2 à 6 mm : l'ordre de granulométrie par rapport à la circulation du fluide étant indifférent dans le cadre de circulation forcée.

Suivant la représentation de la figure 4 la cartouche filtrante 4 comporte un passage creux 19 suivant son axe XX' pour la circulation du fluide et les surfaces de ce passage creux et de la forme extérieure de l'enveloppe de la cartouche sont perforées, permettant ainsi la circulation du fluide depuis ce passage 19 vers la périphérie de la cartouche perpendiculairement à l'axe XX' ; de plus le fluide peut traverser ladite cartouche suivant l'axe XX'

La cartouche 4, 4' de pouzzolane, placée dans ledit panier 3 du "skimmer" ou de toute goulotte de récupération des eaux de surface, a pour rôle de retenir pour sa part des éléments beaucoup plus fins que ledit panier lui-même et qui sont en suspension dans l'eau de la piscine 1, tels que de petites algues, du pollen, de l'huile solaire, des insectes de petites tailles, du limon, etc. Ladite cartouche 4,4' peut également comporter à sa partie supérieure une couche 4₁ de galets de chlore pour le traitement chimique de l'eau en complément de celui physico-chimique apporté par la pouzzolane.

En fait pour de telles cartouches 4, 4' utilisées en tête du circuit de filtration dont l'orifice d'entrée du circuit 5₁ d'aspiration est disposé verticalement sous ledit panier 3, le passage creux 19₁ situé alors verticalement dans l'axe dudit orifice du conduit 5₁ est de diamètre inférieur à celui-ci pour forcer une partie du débit à traverser la cartouche du filtre qui entoure ledit passage, tout en laissant passer une partie du fluide, sans qu'il soit filtré par la pouzzolane mais uniquement grossièrement par le panier 3, afin de ne pas perturber la circulation hydraulique du système de traitement.

Cependant, suivant la représentation de la figure 6 si on n'est pas limité en augmentation de perte de charge dans ledit circuit, ou si l'on utilise une granulométrie de pouzzolane assez importante, ladite cartouche filtrante 4', 10' peut ne pas comporter de tel passage central 19₁ et la surface extérieure périphérique peut être étanche ou non, alors que les faces opposées 21, suivant l'axe XX', sont nécessairement perforées pour assurer la circulation du fluide suivant cet axe XX' et dans toute la section de la cartouche.

Suivant leur fonction de base, de telles cartouches représentées sur les figures 4 ou 6, sont destinées à être mise en place :
- soit dans le panier 3 de récupération et de retenue de déchets flottants, tels que feuilles et autres objets de taille relativement importantes pouvant se déposer à la surface du bassin 1 telle que la piscine représentée sur la figure 1,
- soit dans le panier 9 des pré-filtres 8 qui précédent, dans ces circuits de traitement de l'eau, la pompe de circulation 11 et le filtre 15 proprement dit.

Ces cartouches 4, 4', 10' peuvent être fabriquées avec une enveloppe externe en polyéthylène haute densité, de forme adaptée à leur destination, soit de préférence cylindrique ou tronconique de révolution, et remplies de pouzzolane à granulométrie strictement contrôlée.

La cartouche 10,10' de pré-filtre 8 située en amont de la pompe de circulation 11, joue le même rôle que la cartouche précédente mais vient compléter celle-ci : en fonction des installations il y a lieu de différencier les granulométries de ces deux cartouches de pré-filtre placées sur le circuit 5₁ de filtration afin de pas perturber le système hydraulique.

Suivant la représentation de la figure 5, la cartouche 10 de pré-filtre peut être une cartouche filtrante de forme extérieure symétrique par rapport à son axe XX' soit de préférence cylindrique de révolution, et composée de couches d'enveloppes poreuses remplies de fine de pouzzolane de granulométrie inférieure ou égale à 4 mm et de préférence de moins de 2 mm : elle comporte également en leur centre suivant l'axe XX' par un passage creux 19₂, permettant d'augmenter la surface de passage de l'eau à travers ces enveloppes et qui pénètre donc dans cet orifice 19₂ et circule vers la périphérie de la cartouche 10 pour être évacuée suivant un conduit disposé perpendiculaire à l'axe XX' à la périphérie de la cartouche 10 dans la paroi du récipient 8 qui la contient et à l'opposé de l'orifice d'arrivée du fluide dans ce récipient.

La capacité de filtration de tels filtres 4, 4', 10,10' ainsi que celui du filtre 15 ci-après décrit, est donc due à la structure même de la pouzzolane et à ses propriétés physico-chimiques telles que rappelées en introduction.

Dans la partie du circuit 5₂ de filtration située en aval de la pompe 11, le système de filtration comprend une capacité étanche formant enveloppe 15 : celle-ci comportant au moins un orifice 12 d'arrivée du fluide muni de préférence d'un diffuseur 12₁ pour répartir ledit fluide sur toute la surface de la section du filtre et situé vers une extrémité, de préférence à sa partie supérieure, et un orifice 13₁ de sortie vers son autre extrémité opposée à la première soit de préférence à sa partie inférieure avec également de préférence un répartiteur de reprise du fluide sur le maximum de surface de la section de passage du filtre ; laquelle capacité 15 est remplie de grains 16 de pouzzolane de granulométrie inférieure ou égale à 25 mm et de préférence de moins de 20 mm, soit en fait de préférence un mélange de granulométrie correspondant au deux types de celles utilisée pour les couches décrites dans les cartouches de pré-filtre 4,4',10', soit 0 à 2 mm ou 0/2 correspondant à la fine de pouzzolane, et 2/6 ou 5/10, 10/15 jusqu'à 10/25 mm pour de la pouzzolane en grains de riz ou graviers respectivement ; de plus ladite capacité étanche comprend au moins un bras malaxeur 18 interne, entraîné par un moteur externe 17 et qui est situé entre les deux orifices d'entrée et de sortie afin d'homogénéiser en permanence ou à la demande l'ensemble de la pouzzolane 16.

En plus des propriétés particulières rappelées précédemment de la pouzzolane, un autre avantage de la pouzzolane dans un tel filtre 15 par rapport au sable, en général utilisé dans les circuits de traitement d'eau de piscine, réside dans le fait que la pouzzolane ne se tasse pas et qu'elle est moins dense que le sable traditionnellement utilisé : le passage de l'eau est ainsi plus aisé, avec une capacité de filtration supérieure compte tenu des propriétés physico-chimiques de la pouzzolane ci-avant rappelées.

Suivant la représentation de la figure 1, le circuit 5 de régénération et de recyclage de l'eau contenu dans le réservoir 1 de stockage telle que la piscine, comprend donc au moins une pompe de circulation 11, au moins deux filtres si ce n'est trois, dont l'un, si ce n'est deux, sont placés en amont de la pompe 11 et sont des pré-filtres 4,4',10,10' tels que décrits précédemment, et l'autre placé en aval 15 est une capacité de filtration tels que décrite ci-dessus.

Le circuit amont de la pompe 11 peut comporter également en parallèle au circuit 5₁ en provenance des "skimmers 2" ou autre goulotte de récupération de l'eau de surface, un conduit de vidange ou de recirculation 6 de l'eau en fond de bassin 1 et comportant une boite de dérivation 7 permettant, soit de vidanger ce bassin, soit d'envoyer la totalité de l'eau du bassin dans le circuit de filtration 5₂ afin de régénérer également la totalité de l'eau du bassin 1 et non pas seulement l'eau de surface.

Le circuit 5₂ situé en aval de la pompe 11, comporte également d'une manière connue une vanne à quatre voies 14 permettant d'effectuer plusieurs types de connexions entre les quatre départs et arrivées d'eau que sont : l'arrivée 5₂ du circuit de filtration lui-même, l'arrivée d'eau 12 dans ledit filtre 15, la sortie 13₁ dudit filtre (cette sortie et cette entrée pouvant être du reste inversées), et le retour 13₂ au réservoir 1 à travers du reste suivant le cas des éléments de traitement complémentaires, alors plutôt chimiques que physiques du fluide, ou son évacuation vers un autre circuit externe quand on veut rincer par exemple la capacité 15 ; ces diverses connexions d'utilisation et d'installation sont du reste connues dans des systèmes existants dans lesquels les cartouches et les filtres suivant la présente invention peuvent être adaptés sans grande modification.

Suivant la représentation des figures 7 à 9, pour traiter des effluents de diverses origines comme ceux cités en introduction, la filtration de ceux-ci suivant l'invention est assurée par la percolation desdits effluents, au travers d'une série de lits ou couches superposés de cartouches filtrantes 4₅ contenus dans au moins un bac étanche 21 posé sur le sol ou enterré, et de préférence deux disposés en série. Dans les exemples de réalisation de ces figures 7 à 12, lesdites cartouches filtrantes 4₅ sont de forme parallélépipédique de type de celles décrites dans la demande de brevet FR 274 4154 déjà évoqué précédemment et contenant de la pouzzolane de granulométrie inférieure à 25 mm, choisie en fait suivant les applications et les disponibilités des carrières fournissant ladite pouzzolane, avec des trous de perforation dans leurs parois recevant les effluents, qui sont celles supérieures pour un écoulement vertical par gravité : ces trous sont de dimensions ou de diamètre d'ouverture inférieure à celle des grains de granulométrie la plus faible contenue dans ladite cartouche et qualifiés pour cela de micro-trous, soit de l'ordre respectivement par rapport aux exemples de granulométrie donnés ci-dessus, de 3 à 10 mm ; sur la face opposée d'où s'évacuent les effluents, les trous de perforation sont de dimension plus petite, de l'ordre de 1 à 3 mm afin de mieux maîtriser la répartition de l'écoulement des effluents à travers l'ensemble du volume représenté par lesdites cartouches dans les bacs 21.

De préférence, ces cartouches sont disposées dans deux bacs reliés en série, d'une part pour éviter d'avoir trop de hauteur de couches superposées et d'autre part de disposer d'un regard 22 entre lesdits bacs pour pouvoir contrôler, régler et éventuellement compléter le traitement des effluents tel qu'en rajoutant par exemple un traitement spécifique, tels que chimique, bactériologique ou enzymatique.

Les dimensions en hauteur, longueur et largeur de l'ensemble des bacs tels que par exemple disposés suivant trois circuits parallèles représentés suivant la figure 8 sont à adapter en fonction de la nature, du volume des effluents à traiter et de l'espace disponible pour réaliser les ouvrages.

Afin d'éviter la mise en place de motorisations telles que par pompes, la réalisation desdits bacs 21 doit de préférence permettre le cheminement des effluents à filtrer par gravité : les bacs successifs sont alors disposés en cascade les uns au dessus des autres.

Pour permettre une bonne efficacité de la percolation, un premier filtrage et une bonne répartition des effluents en haut des bacs 21 de filtration, un système de regards répartiteurs 23₂ et de tuyaux perforés 24 permet l'aspersion d'un sable 4₃ de pouzzolane de granulométrie inférieure ou égale à 4 mm, de préférence entre 0,2 et 2 mm, et uniformément réparti à la surface d'un géotextile 25 recouvrant la dernière couche supérieure de cartouches 4₅ de chaque bac 21 : ledit sable 4₃ constitue une couche uniforme d'épaisseur maximale égale par exemple à celle d'une cartouche 4₅ pour ne pas trop augmenter la perte de charge et freiner l'écoulement des effluents, il assure une bonne répartition de ceux ci sur toute la surface des bacs 21 ; ledit géotextile 25 évite le fluage du sable 4₃ et permet une diffusion homogène des effluents vers les cartouches de filtration 4₅ ; ledit géotextile peut également être remplacé par des cartouches sans face supérieure.

Ce système de filtration en deux bacs successifs 21 suivant l'invention est inclus dans un circuit de filtration plus général comprenant une trémie de réception des effluents 26, un bac 27 de ralentissement de flux comprenant deux compartiments 27₁, 27₂, qui sont destinés soit à la décantation des éléments lourds en suspension et l'envoi des effluents ayant subi ladite décantation vers le système de filtration, soit de recevoir un système de dilution, au moyen d'un brassage effectué par exemple avec de l'eau injecté sous faible pression 28.

A la sortie de ce bac tampon 27, un système de regard répartiteur 23₁ permet selon la nécessité, dépendant du volume et de la nature des effluents, de diriger et de répartir ceux-ci vers un ou plusieurs systèmes filtrants.

A la sortie du deuxième bac 21₂, mais il pourrait y avoir d'autres bacs successifs en cascade, un bac de rétention étanche 29 permet de stocker temporairement les effluents filtrés qui peuvent être par exemple relevés au moyen d'une pompe 30 et dirigés vers des canalisations de rejet 31, tels que par épandage final ou pour des utilisations d'arrosage, ou en milieu naturel ou même en recyclage...

En fonction de la nature des effluents à filtrer, une couverture étanche 32, recouvre l'installation ou seulement les bacs : un exemple de type hangar ou serre tunnel agricole, muni de ventilation basse et haute avec filtres anti-odeurs 33, et que représenté sur la figure 7 ; des dallettes de béton, des tampons en fonte, des capots en tôle etc...peuvent également recouvrir seulement les bacs pour des installations plus réduites telles que représentées sur la figure 9.

Dans cette figure, le regard 22 disposé entre les deux bacs 21 peut comporter une ventilation supérieure.

Suivant la représentation des figures 10 et 11, l'arrivée des effluents en provenance des eaux de pluie qui rincent la piste 36 de stations de carburant, percole au travers le dallage béton 36₂ qui la constitue.

Suivant la figure 10, le système de filtration suivant l'invention est enterré sous ladite piste de la station de carburant et comprend sous ladite dalle béton 36₂ une couche de sable pouzzolane 4₃ puis un géotextile 25 pris en sandwich avec une deuxième couche de sable pouzzolane 4₃ disposée sur une série de lits de cartouches de filtration 4₅ contenant de la pouzzolane de granulométrie inférieure ou égale à à 25 mm ; l'ensemble du système de filtration est séparé du sol environnant par une géobâche étanche 37 posée préalablement sur le sol préparé et dressé d'une fosse recevant ensuite l'ensemble de ces éléments de filtration.

Une canalisation 37 située en partie basse de cette installation permet l'évacuation des eaux ainsi filtrées vers un deuxième bac 21₂, faisant également office de regard de contrôle 22, et comprenant une nouvelle série de lits de cartouches 4₅ : après cette deuxième filtration, les effluents résiduels sont évacués vers tout dispositif de rejet 31 ; cedit deuxième bac 21₂ comporte un évent 34 disposé en haut d'un mat pour la ventilation des mauvaises odeurs, ledit mat pouvant servir de support de pavillon.

Suivant la représentation de la figure 11, le circuit de récupération des eaux de pluie rinçant ladite piste 36 de station de carburant, comprend un vide de type sanitaire 39 sous ladite dalle béton 36₂, supportée par des murs de refend 40 comportant des trous 41 en partie basse au niveau de la dalle étanche support 42 inférieure; ce vide de type sanitaire 39 permet de récupérer les eaux percolant au travers de la dalle supérieure 36₂ depuis la piste de station de carburant 36₁ et mélangées avec des hydrocarbures, qui ont pu s'y déposer. Grâce alors à une pente suffisante, telle que de toute façon nécessaire pour l'ensemble des bacs 21 décrits précédemment, ces effluents sont dirigés au moyen d'un tuyau d'évacuation 38 vers l'un des systèmes précédemment exposé dans les figures 7 à 10.

Suivant la représentation de la figure 12, dans certains cas ou l'emplacement disponible où les pentes d'évacuation possibles ne permettent pas de disposer de deux bacs en cascade dans lequel les effluents traversent la pouzzolane par gravité, on peut faire communiquer les deux dits bacs par un siphon 43 : ainsi, dans le premier bac 21₁, une partie de la filtration se fait par percolation à travers tous les lits de ses cartouches filtrantes 4_{5,} puis par effet de siphon dans les lits inférieurs des cartouches filtrantes 4₅ du bac suivant 21₂, puis en remontant dans toutes les couches des cartouches filtrantes de ce deuxième bac, jusqu'à atteindre la canalisation d'évacuation 38.

Une telle disposition est adaptée par exemple à une utilisation de douche de plage 35, dont les eaux ainsi filtrées peuvent être ensuite évacuées directement à la mer 31 ; le regard de contrôle 22 est alors disposé sur le conduit d'évacuation 38 et ladite douche 35 peut être fixée sur un mât, comprenant l'évent 34 d'évacuation des odeurs du deuxième bac 21₂, et pouvant supporter un pavillon de plage par exemple.

## Revendications

1. Système de filtration pour traitement physique de fluide et comportant un matériau granulaire inerte enfermé dans au moins une enveloppe (4, 10, 15) dans laquelle ledit fluide peut circuler en traversant ledit matériau, caractérisé en ce que celui-ci à structure alvéolaire de densité inférieure à 1, est de la pouzzolane (4₂, 4₃, 4₄) de granulométrie inférieure ou égale à 25 mm.

2. Système de filtration suivant la revendication 1, caractérisé en ce que ladite enveloppe (4, 4', 10') est une cartouche filtrante ayant au moins deux faces parallèles perforées, la pouzzolane remplissant ladite cartouche étant disposée en au moins une couche parallèle à ces faces, et perpendiculaire à l'axe d'arrivée du fluide.

3. Système de filtration suivant la revendication 2, caractérisé en qui comporte au moins deux couches de granulométrie différentes de pouzzolane, l'une (4₃) disposée avant la suivante par rapport à la direction d'arrivée du fluide étant constituée de sable dont les grains fins sont de granulométrie inférieure à 4 mm et l'autre (4₂) étant constituée de grains de grains de granulométrie inférieure ou égale à 25 mm, cette dernière au moins étant contenue dans ladite cartouche filtrante.

4. Système de filtration suivant la revendication 2 ou 3, caractérisé en ce qu'il comporte au moins un bac (21) étanche, contenant plusieurs couches superposées desdites cartouches filtrantes (4).

5. Système de filtration suivant la revendication (2) ou 3, caractérisée en ce que la cartouche filtrante (4) comporte un passage creux (19₁) suivant son axe (XX') perpendiculaire auxdites faces parallèles perforées et les surfaces de ce passage creux et de la forme extérieure de l'enveloppe de la cartouche sont également perforées.

6. Système de filtration suivant la revendication 1, caractérisé en ce que ladite enveloppe (15) est une capacité étanche comportant au moins un orifice (12) d'arrivée du fluide vers une de ses extrémités et un orifice (13₁) de sortie disposé vers une autre extrémité opposée à la première, laquelle capacité étant remplie de grains (16) de pouzzolane de granulométrie inférieure ou égale à 25 mm et comprenant au moins un bras malaxeur (18) interne situé entre les deux orifices d'entrée et de sortie.

7. Système de filtration suivant l'une quelconque des revendications 1 à 6, caractérisé en ce qu'il est inclus dans un circuit de régénération et de recyclage d'eau contenu dans un réservoir (1) de stockage et comportant au moins une pompe de circulation (11).

8. Système de filtration suivant la revendication 7, caractérisé en ce qu'il comporte au moins deux filtres, dont l'un placé en amont de la pompe (11) est un pré-filtre (8) réalisé suivant l'une quelconque des revendications 2 à 4 et l'autre placé en aval de la pompe est une capacité (15) réalisée suivant la revendication 6.

9. Système de filtration suivant l'une quelconque des revendications 7 ou 8, caractérisé en ce que ledit réservoir (1) de stockage d'eau est une piscine dont l'aspiration de l'eau par la pompe (11) est réalisée à travers au moins un conduit (2) dont l'orifice est disposé au niveau de la surface de l'eau dans la piscine et comporte un panier (3) faisant tamis pour la récupération des déchets et incluant une cartouche filtrante (4, 4') réalisée suivant l'une quelconque des revendications 2 ou 3.

10. Système de filtration suivant l'une quelconque des revendications 1 à 4, caractérisé en ce qu'il est inclus dans un circuit de filtration d'effluent assuré par la percolation de ceux-ci passant par gravité au travers de la pouzzolane, et comprend au moins deux bacs (21) en série et contenant chacun ladite pouzzolane.

11. Application de la pouzzolane, matériau à structure alvéolaire de densité inférieure à 1, caractérisée en ce qu'elle est utilisée comme seul matériau de filtration de fluide, disposé dans au moins une enveloppe (4,10,15) fermée laissant circuler, entre deux de ses faces opposées, ledit fluide qui traverse la pouzzolane, celle-ci étant d'une granulométrie inférieure ou égale à 25 mm.
